(19) Europäisches Patentamt
European Patent Office
Office européen des brevets

(11) **EP 3 329 532 B1**

(12) **EUROPÄISCHE PATENTSCHRIFT**

(45) Veröffentlichungstag und Bekanntmachung des Hinweises auf die Patenterteilung:
**26.06.2019 Patentblatt 2019/26**

(21) Anmeldenummer: **16745483.4**

(22) Anmeldetag: **02.08.2016**

(51) Int Cl.:
*H01M 4/134* (2010.01)   *H01M 4/38* (2006.01)
*H01M 10/0525* (2010.01)   *H01M 10/0567* (2010.01)
*H01M 4/1395* (2010.01)   *H01M 10/0568* (2010.01)
*H01M 4/02* (2006.01)

(86) Internationale Anmeldenummer:
**PCT/EP2016/068405**

(87) Internationale Veröffentlichungsnummer:
**WO 2018/024317 (08.02.2018 Gazette 2018/06)**

(54) **LITHIUM-IONEN-BATTERIEN**

LITHIUM ION BATTERIES

BATTERIES LITHIUM-ION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.06.2018 Patentblatt 2018/23**

(73) Patentinhaber: **Wacker Chemie AG**
**81737 München (DE)**

(72) Erfinder:
• **HAUFE, Stefan**
**85579 Neubiberg (DE)**
• **BRÄUNLING, Daniel**
**80807 München (DE)**

(74) Vertreter: **Ege, Markus et al**
**Wacker Chemie AG**
**Hanns-Seidel-Platz 4**
**81737 München (DE)**

(56) Entgegenhaltungen:
**EP-A2- 1 313 158    US-A1- 2011 045 357**

**Beschreibung**

Die Erfindung betrifft Lithium-Ionen-Batterien mit Silicium enthaltenden Anodenmaterialien.

Wiederaufladbare Lithium-Ionen-Batterien sind heute die praxistauglichen elektrochemischen Energiespeicher mit den höchsten gravimetrischen Energiedichten von beispielsweise bis zu 250 Wh/kg. Sie werden vor allem im Bereich der tragbaren Elektronik, für Werkzeuge und auch für elektrisch angetriebene Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere elektrische Reichweiten der Fahrzeuge zu erreichen.

Als Elektrolytstammlösungen sind für Lithium-Ionen-Batterien cyclische/aliphatische Carbonate vielfach beschrieben worden, wie beispielsweise das in US7476469 genannte Vinylencarbonat (VC). Als Elektrolyadditive für NMC442//Graphit-Vollzellen empfehlen Gu-Yeon Kim and J.R. Dahn, Journal of The Electrochemical Society, 162 (3) A437-A447 (2015) Nitrile, wie Succinonitril (SN), Adiponitril (AN) oder Pimelonitril (PN). DE 69027143 lehrt Tributylamin als Elektrolytadditiv. In US8551661 wird eine Additiv-Kombination aus $Li(C_2O_4)BF_2$ sowie Aminen, wie Trialkylamine, Arylamine oder heterozyklische Amine, beschrieben.

Als Material für die negative Elektrode ("Anode") für Lithium-Ionen-Batterien ist graphitischer Kohlenstoff weit verbreitet. Nachteilig ist jedoch seine relativ niedrige elektrochemische Kapazität von theoretisch höchstens 372 mAh pro Gramm Graphit, die nur etwa ein Zehntel der mit Lithiummetall theoretisch erreichbaren elektrochemischen Kapazität entspricht. Zur Lösung dieses Problems ist Silicium als alternatives Anodenaktivmaterial empfohlen worden. Silicium bildet mit Lithium binäre elektrochemisch aktive Legierungen, die einen sehr hohen Lithiumgehalt aufweisen können. Das bekannte Maximum an Lithiumgehalt findet man bei $Li_{4,4}Si$, was einer sehr hohen theoretischen spezifischen Kapazität im Bereich von 4200 mAh pro Gramm Silicium entspricht.

Die Kombination einer Silicium-enthaltenden Anode mit einem Elektrolyten, der ein oder mehrere Amine enthält, wird in EP1313158 A2 bzw. in US2011/045357 A1 beschrieben.

Nachteiligerweise ist die Ein- und Auslagerung von Lithium in Silicium mit einer sehr starken Volumenänderung verbunden, die 300% erreichen kann. Diese Volumenausdehnung führt zu einer starken mechanischen Belastung der Kristallite, die schließlich zu deren Auseinanderbrechen führt. Dieser als elektrochemische Mahlung bezeichnete Prozess führt im Aktivmaterial und in der Elektrodenstruktur zu einem Verlust der elektrischen Kontaktierung und damit zur Zerstörung der Elektrode unter Kapazitätsverlust. Die Abnahme der Kapazität im Laufe mehrerer Lade- und Entladezyklen wird als Fading oder kontinuierlicher Kapazitätsverlust bezeichnet und ist in der Regel irreversibel. Beispielsweise ergeben Mischungen aus mikrometer-skaligem Silicium und Kohlenstoff Elektroden mit sehr hohen anfänglichen Kapazitäten von bis über 2000 mAh pro Gramm Elektrodenmaterial, die jedoch ein ausgeprägtes Fading erleiden.

Zur Reduzierung der mechanischen Beanspruchung und damit zur Verhinderung der elektrochemischen Mahlung wurde vielfach der Einsatz von nanoskaligen oder nanostrukturierten Siliciumpartikeln für das Anodenmaterial von Lithium-Ionen-Zellen empfohlen, wie beispielsweise in der WO 2014/202529 oder der EP 1730800 beschrieben. Die nanoskaligen Siliciumpartikel der EP 1730800 sind hierbei zu Aggregaten zusammengelagert.

M. Gauthier diskutiert im Journal of Power Sources, 256, 2014, Seiten 32 bis 36, Anodenmaterial mit Siliciumpartikeln, die durch sehr breite, mehrmodale Größenverteilungen und erhebliche Grobanteile charakterisiert sind. Die beschriebenen Halbzellen erreichen noch nicht die in der Praxis geforderte Coulomb-Effizienz. Auch US 2003235762 beschreibt Siliciumpartikel mit erheblichen Grobanteilen, ohne Angaben zum Herstellprozess der Siliciumpartikel zu machen. Damit sind die Kornform und die Sphärizität der Siliciumpartikel oder nicht-aggregierte Siliciumpartikel implizit nicht offenbart. Das Aktivmaterial der US 2009305129 Schrift enthält Siliciumpartikel mit Kristallitgrößen von < 100 nm und Partikelgrößen von 7 bis 25 $\mu$m, die über Gasphasenprozesse hergestellt wurden.

US 2005/0214646 beschreibt Batterien, deren Anodenmaterial im beladenen Zustand ein Lithium/Silicium-Verhältnis von höchstens 4,0 hat. Konkret beschrieben sind molare Li/Si-Verhältnisse von 3,5 und größer. JP 4911835 verwendet Li/Si-Verhältnisse für das Anodenmaterial geladener Lithium-Ionen-Batterien im Bereich von 2,3 bis 4,0.

Bisher bekannte Lithium-Ionen-Batterien zeigen weiterhin zu hohe initiale und/oder kontinuierliche Kapazitätsverluste. Ein Grund hierfür ist die Volumenänderung der Siliciumpartikel beim Auf- und Entladen der Lithium-Ionen-Batterien und der damit verbundenen mechanischen Zermürbung der Anode. Zudem reagiert die Oberfläche des Silicium-Anodenmaterials mit Bestandteilen des Elektrolyten unter kontinuierlicher Bildung passivierender Schutzschichten (Solid Electrolyte Interface; SEI), was zu einer Immobilisierung von Lithium und einem kontinuierlichen Anstieg des Widerstandes auf der Anodenseite führt. Durch die Volumenänderung des Siliciums sind diese passivierenden Schutzschichten nur teilweise stabil, so dass bei jedem Lade-/Entladezyklus eine gewisse Menge Lithium immobilisiert wird. Da in der Vollzelle die Menge an mobilem Lithium, welches der nutzbaren Kapazität entspricht, begrenzt ist, wird dieses schnell verbraucht und die Kapazität der Zelle nach zu wenigen Zyklen abgebaut. Der Rückgang der reversiblen Kapazität der Lithium-Ionen-Batterien während der fortgesetzten Zyklen wird auch als Fading bezeichnet.

Vor diesem Hintergrund bestand die Aufgabe der vorliegenden Erfindung darin, Lithium-Ionen-Batterien mit Siliciumpartikel enthaltenden Anoden bereitzustellen, die eine hohe initiale reversible Kapazität und in den Folgezyklen ein stabiles elektrochemisches Verhalten mit möglichst geringem Rückgang der reversiblen Kapazität (Fading) aufweisen.

Ein Gegenstand der Erfindung gemäß Anspruch 1 sind Lithium-Ionen-Batterien umfassend Kathode, Siliciumpartikel enthaltende Anode, Separator und Elektrolyt, dadurch gekennzeichnet, dass der Elektrolyt ein oder mehrere Amine enthält und das Material der Anode (Anodenmaterial) in der vollständig geladenen Lithium-Ionen-Batterie nur teilweise lithiiert ist.

Erfindungswesentlich ist also, dass das Anodenmaterial, insbesondere die Siliciumpartikel, in der vollständig geladenen Lithium-Ionen-Batterie nur teilweise lithiiert ist. Vollständig geladen bezeichnet den Zustand der Batterie, in dem das Anodenmaterial der Batterie ihre höchste Beladung an Lithium aufweist. Teilweise Lithiierung des Anodenmaterials bedeutet, dass das maximale Lithiumaufnahmevermögen der Siliciumpartikel im Anodenmaterial nicht ausgeschöpft wird. Das maximale Lithiumaufnahmevermögen der Siliciumpartikel entspricht allgemein der Formel $Li_{4,4}Si$ und beträgt somit 4,4 Lithiumatome pro Siliciumatom. Dies entspricht einer maximalen spezifischen Kapazität von 4200 mAh pro Gramm Silicium.

Das Verhältnis der Lithiumatome zu den Siliciumatomen in der Anode einer Lithium-Ionen-Batterie (Li/Si-Verhältnis) kann beispielsweise über den elektrischen Ladungsfluss eingestellt werden. Der Lithiierungsgrad des Anodenmaterials beziehungsweise der im Anodenmaterial enthaltenen Siliciumpartikel ist proportional zur geflossenen elektrischen Ladung. Bei dieser Variante wird beim Laden der Lithium-Ionen-Batterie die Kapazität des Anodenmaterials für Lithium nicht voll ausgeschöpft. Dies resultiert in einer teilweisen Lithiierung der Anode.

Bei einer alternativen, bevorzugten Variante wird das Li/Si-Verhältnis einer Lithium-Ionen-Batterie durch das Zellbalancing eingestellt. Hierbei werden die Lithium-Ionen-Batterien so ausgelegt, dass das Lithiumaufnahmevermögen der Anode vorzugsweise größer ist als das Lithiumabgabevermögen der Kathode. Dies führt dazu, dass in der vollständig geladenen Batterie das Lithiumaufnahmevermögen der Anode nicht voll ausgeschöpft ist, d.h. dass das Anodenmaterial nur teilweise lithiiert ist.

Bei der erfindungsgemäßen teilweisen Lithiierung beträgt das Li/Si-Verhältnis im Anodenmaterial im vollständig geladenen Zustand der Lithium-Ionen-Batterie ≤ 2,2, besonders bevorzugt ≤ 1,98 und am meisten bevorzugt ≤ 1,76. Das Li/Si-Verhältnis im Anodenmaterial im vollständig geladenen Zustand der Lithium-Ionen-Batterie ist vorzugsweise ≥ 0,22, besonders bevorzugt ≥ 0,44 und am meisten bevorzugt ≥ 0,66.

Die Kapazität des Siliciums des Anodenmaterials der Lithium-Ionen-Batterie wird vorzugsweise zu ≤ 50%, besonders bevorzugt zu ≤ 45% und am meisten bevorzugt zu ≤ 40% genutzt, bezogen auf eine Kapazität von 4200 mAh pro Gramm Silicium.

Der Lithiierungsgrad von Silicium beziehungsweise die Ausnutzung der Kapazität von Silicium für Lithium (Si-Kapazitätsnutzung α) kann beispielsweise an Hand folgender Formel bestimmt werden:

$$\alpha = \frac{\beta}{\gamma \cdot FG \cdot \omega_{Si}}$$

β: Delithiierungs-Kapazität der Si-haltigen Anode bei der jeweiligen Ladeschlussspannung der Lithium-Ionen-Batterie;

γ: maximale Kapazität von Silicium für Lithium bei einer Stöchiometrie von $Li_{22}Si_5$ (entspricht 4200 mAh/g) ;

FG: Flächengewicht der Anodenbeschichtung;

$\omega_{Si}$: Si-Gewichtsanteil in der Anodenbeschichtung.

Bestimmung der Delithiierungs-Kapazität β:

Zuerst wird die Lithium-Ionen-Batterie in den elektrisch geladenen Zustand überführt, indem sie nach dem cc-Verfahren (constant current) mit konstantem Strom von 5 mA/g (entspricht C/25) bis zum Erreichen der Spannungsgrenze von 4,2 V geladen wird. Hierbei wird die Anode lithiiert. Die so geladene Lithium-Ionen-Batterie wird geöffnet, die Anode entnommen und mit dieser eine Knopf-Halbzelle (Typ CR2032, Hohsen Corp.) mit Lithium-Gegenelektrode (Rockwood Lithium, Dicke 0,5 mm, Dm = 15 mm) aufgebaut. Ein mit 120 μl Elektrolyt getränktes Glasfaser-Filterpapier (Whatman, GD Type D) kann als Separator (Dm = 16 mm) dienen. Als Elektrolyt wird eine 1,0-molare Lösung von Lithiumhexafluorophosphat in einem 3:7 (v/v) Gemisch von Fluorethylencarbonat und Ethylmethylcarbonat eingesetzt, welche mit 2,0 Gew.-% Vinylencarbonat versetzt ist. Der Bau der Zelle erfolgt im Allgemeinen in einer Glovebox (< 1 ppm an $H_2O$ und $O_2$ in der Glovebox-Atmosphäre). Der Wassergehalt der Trockenmasse aller Einsatzstoffe liegt vorzugsweise unterhalb von 20 ppm. Die Delithiierungs-Kapazität β der Si-haltigen Anodenbeschichtung wird bestimmt durch Laden der so hergestellten Knopf-Halbzelle (Arbeitselektrode = positive Elektrode = Si-Anode; Gegenelektrode = negative Elektrode = Lithium) mit C/25 bis Erreichen der Spannungsgrenze von 1,5 V. Die elektrochemischen Messungen an Voll- und Halbzelle werden bei 20°C durchgeführt. Der oben genannte konstante Strom bezieht sich auf das Gewicht der Beschichtung der positiven Elektrode.

Bestimmung des Si-Gewichtsanteils $\omega_{Si}$:

Aus einer Probe der vollständig delithiierten Anodenbeschichtung (ohne Cu-Folie) wird zunächst Elektrolyt mit Tetrahydrofuran ausgewaschen. Anschließend wird eine Probe sauer aufgeschlossen. Dazu werden 75 mg der Anodenbeschichtung in ein Mikrowellenaufschlussgefäß (100 ml TFM-Liner von Anton-Paar) überführt und mit 5 ml $HNO_3$ (65%ig, p.a.), 0,25 ml HCl (37%ig, p.a.) und 1 ml HF (40%ig, suprapur) versetzt. Das Mikrowellenaufschlussgefäß wird verschlossen, in ein Mikrowellengerät (Multiwave 3000 Anton Paar) gegeben und für 45 min bei 950 W behandelt. Der Aufschluss wird vollständig in 50 ml Tubes überführt und mit Wasser auf 50 ml aufgefüllt. Davon werden 0,50 ml entnommen, mit 2,50 ml 4%iger Borsäure versetzt und wieder auf 50 ml aufgefüllt (Verdünnung: Faktor 100). Der Si-Gewichtsanteil $\omega_{Si}$: wird bestimmt mittels ICP-OES (inductively coupled plasma)-Emissionspektrometrie (Messgerät: Optima 7300 DV, Fa. Perkin Elmer; Probeneinführungssystem: Zerstäuber Meinhard mit Zyklonsprühkammer; Kalibrierbereich: 0,1 bis 20,0 mg/l Si; Si-Standard-Stammlösung Certipur von Merck mit 1000 mg/l Si (zertifiziert)).

Bei den Aminen des Elektrolyten kann es sich beispielsweise um primäre, sekundäre oder insbesondere um tertiäre Amine handeln. Die Amine können aromatisch oder vorzugsweise aliphatisch sein. Die Amine können ein oder mehrere Amin-Gruppen tragen. Auch Polyamine sind geeignet. Amine tragen vorzugsweise 1 bis 5 Amin-Gruppen und besonders bevorzugt 1 bis 3 Amin-Gruppen. Am meisten bevorzugt sind Amine mit einer Amin-Gruppe (Monomamine).

Bevorzugte Monoamine erfüllen die allgemeine Formel (I)

$$NR^1R^2R^3 \qquad (I),$$

in der

R$^1$, R$^2$, R$^3$      H oder einwertigen Kohlenwasserstoffrest mit 1-30 Kohlenstoffatomen, der substituiert sein kann mit Substituenten, die ausgewählt werden aus F-, Cl- und -OR$^4$, bei dem nicht benachbarte -$CH_2$-Einheiten ersetzt sein können durch Einheiten, die ausgewählt werden aus -C(=O)- und -O-, und

R$^4$      Alkylrest mit 1-10 Kohlenstoffatomen bedeuten.

Kohlenwasserstoffreste R$^1$, R$^2$, R$^3$ können linear, zyklisch, verzweigt, aromatisch, gesättigt oder ungesättigt sein. Bevorzugt sind Alkylarylreste, Arylalkylreste und Phenylreste. Kohlenwasserstoffreste R$^1$, R$^2$, R$^3$ weisen vorzugsweise 1 bis 20 Kohlenstoffatome auf, besonders bevorzugt 1 bis 6 Kohlenstoffatome.

Wenn zwei oder drei der Reste R$^1$, R$^2$, R$^3$ miteinander verbunden sind, können diese einen mono- oder bicyclischen Kohlenwasserstoffring bilden.

Bevorzugt sind tertiäre Amine, insbesondere solche, bei denen in der allgemeinen Formel (I) R$^1$, R$^2$, R$^3$ einwertige vorzugsweise nicht substituierte Kohlenwasserstoffreste mit 1 bis 30 Kohlenstoffatomen, besonders bevorzugt 2 bis 10 Kohlenstoffatomen bedeuten.

Bevorzugte Polyamine erfüllen die allgemeine Formel (II)

$$R^5{}_2N\text{-}(CR^6{}_2)_a\text{-}(NR^7\text{-}(CR^6{}_2)_b)_c\text{-}NR^5{}_2 \qquad (II),$$

in der

R$^5$, R$^6$, R$^7$ H oder Kohlenwasserstoffreste mit 1-18 Kohlenstoffatomen, die substituiert sein können mit Substituenten, die ausgewählt werden aus F-, Cl- und -OH und bei denen nicht benachbarte -$CH_2$-Einheiten ersetzt sein können durch Einheiten, die ausgewählt werden aus -C(=O)- und -O-,

a, b ganzzahlige Werte von 1 bis 6 und

c den Wert 0 oder einen ganzzahligen Wert von 1 bis 40 bedeuten.

a, b bedeuten vorzugsweise die Werte 2 oder 3. c bedeutet vorzugsweise einen ganzzahligen Wert von 1 bis 6. Vorzugsweise sind a und b gleich.

Beispiele für bevorzugte Polyamine der allgemeinen Formel (II) sind: Diethylentriamin ($H_2N$-$CH_2CH_2$-NH-$CH_2CH_2$-$NH_2$), Triethylentetramin ($H_2N$-$CH_2CH_2$-(NH-$CH_2CH_2$-)$_2$-$NH_2$), Tetraethylenpentamin ($H_2N$-$CH_2CH_2$-(NH-$CH_2CH_2$-)$_3$-$NH_2$), Pentaethylenhexamin ($H_2N$-$CH_2CH_2$-(NH-$CH_2CH_2$-)$_4$-$NH_2$), Hexaethylenheptamin ($H_2N$-$CH_2CH_2$-(NH-$CH_2CH_2$-)$_5$-$NH_2$). Gemische solcher Amine sind beispielsweise kommerziell verfügbar unter dem Handelsname AMIX1000® (BASF SE).

Weitere Beispiele für bevorzugte Amine sind Tributylamin, Tripentylamin, Trihexylamin, Triisooctylamin, Octylamin, Nonylamin, Decylamin, Undecylamin, Dodecylamin (Laurylamin), Triisooctylamin, Tridecylamin, Tridecylamin (Isomerengemisch), Tetradecylamin (Myristylamin), Pentadecylamin, Hexadecylamin (Cetylamin), Heptadecylamin, Octadecylamin (Stearylamin), 4-Hexylanilin, 4-Heptylanilin, 4-Octylanilin, 2,6-Diisopropylanilin, 4-Ethoxyanilin, N-Methylanilin, N-Ethyl-anilin, N-Propylanilin, N-Butylanilin, N-Pentylanilin, N-Hexylanilin, N-Octylanilin, N-Cyclohexylanilin, Dicyclohexylamin, p-Toluidin, Indolin, 2-Phenylethylamin, 1-Phenylethylamin, N-Methyldecylamin, Benzylamin, N,N-Dimethylbenzylamin, 1-Methylimidazol, 2-Ethylhexylamin, Dibutylamin, Dihexylamin, Di-(2-ethylhexylamin), 3,3'-Dimethyl-4,4'-diaminodicyclohexylmethan, 4,4'-Diaminodicyclohexylmethan, Ditridecylamin (Isomerengemisch), Isophorondiamin, N,N,N',N'-Tetramethyl-1,6-hexandiamin, N,N-Dimethylcyclohexylamin, Octamethylendiamin, 2,6-Xylidin, 4,7,10-Trioxatridecan-1,13-diamin, 4,9-Dioxadodecan-1,12-diamin, Di-(2-methoxyethyl)amin, Bis(2-dimethylaminoethyl)ether, Polyetheramin D230® (BASF SE), 2-(Diisopropylamino)ethylamin, Pentamethyldiethylentriamin, N-(3-Aminopropyl)imidazol, 1,2-Dimethylimidazol, 2,2'-Dimorpholinodiethylether, Dimethylaminoethoxyethanol, Bis(2-dimethylaminoethyl)ether, Lupragen®N600 - S-Triazin (BASF AG), 1,8-Diazabicyclo-5,4,0-undecen-7 (DBU), 3-(2-Aminoethylamino)propylamin, 3-(Cyclohexylamino)propylamin, Dipropylentriamin, N4-Amin (N,N'-Bis(3-aminopropyl)-ethylendiamin), AMIX M (BASF AG) (=hochsiedende Morpholinderivate), 1-(2-Hydroxyethyl)piperazin, 1-Vinylimidazol, 1-Hexylimidazol, 1-Octylimidazol, 1-(2-Ethylhexyl-)imidazol.

Besonders bevorzugte Amine sind tertiäre Alkylamine, wie Tributylamin, Tripentylamin, Trihexylamin oder Triisooctylamin, oder N,N-Dimethylbenzylamin, N,N-Dimethylcyclohexylamin, Bis(2-dimethylaminoethyl)ether, 2-(Diisopropylamino)ethylamin, Pentamethyldiethylentriamin, 2,2'-Dimorpholinodiethylether, Dimethylaminoethoxyethanol, Bis(2-dimethylaminoethyl)ether. Am meisten bevorzugt sind Tributylamin, Tripentylamin, Trihexylamin oder Triisooctylamin.

Bevorzugt sind Amine mit einem Siedepunkt von ≥ 120°C bei 1013 hPa, insbesondere ≥ 150°C bei 1013 hPa.

Vorzugsweise enthält der Elektrolyt 0,1 bis 10 Gewichtsteile, besonders bevorzugt 0,5 bis 8 Gewichtsteile und am meisten bevorzugt 1 bis 5 Gewichtsteile Amin.

In einer bevorzugten Ausführungsform der vorliegenden Erfindung enthält der Elektrolyt zusätzlich ein oder mehrere Nitrile. Mit solchen Elektrolyten kann die erfindungsgemäße Aufgabe noch besser gelöst werden.

Es sind allgemein Nitrile von Mono- oder Polycarbonsäuren geeignet. Die Nitrile können aromatische oder vorzugsweise aliphatische, gesättigte Kohlenwasserstoff-Reste tragen. Die Nitrile können mehrere endständige Nitril-Gruppen, vorzugsweise eine endständige Nitril-Gruppe tragen. Die Nitrile tragen vorzugsweise 1 bis 5 Nitril-Gruppen und besonders bevorzugt 1 bis 3 Nitril-Gruppen. Am meisten bevorzugt sind Nitrile mit einer Nitril-Gruppe. Die Nitrile enthalten vorzugsweise 2 bis 20 Kohlenstoffatome, insbesondere 4 bis 12 Kohlenstoffatome.

Bevorzugt sind Nitrile von Monocarbonsäuren, wie Essig-, Propion-, Butter-, Valerian- und Capronsäure und der Fettsäuren mit bis zu 18 Kohlenstoffatomen. Besonders bevorzugt ist Valeronitril (VN) oder dessen Derivate. Bevorzugt sind auch die Dinitrile der Malon-, Bernstein-, Glutar-, Adipin-, Pimelin- und Suberinsäure.

Besonders bevorzugt sind silylierte Nitrile, insbesondere von aliphatischen, gesättigten Monocarbonsäuren mit bis zu 18 Kohlenstoffatomen. Silylierte Nitrile tragen allgemein ein oder mehrere Silyl-Gruppen, vorzugsweise 1 bis 5 Silyl-Gruppen, besonders bevorzugt eine Silyl-Gruppe. Die Silyl-Gruppen sind üblicherweise an aliphatische oder aromatische Kohlenstoffatome der Nitrile gebunden.

Die Silyl-Gruppen tragen vorzugsweise ein oder mehrere Alkyl-Reste, beispielsweise mit 1 bis 10 C-Atomen, insbesondere 1 bis 5 C-Atomen, wie Methyl- oder Ethyl-Reste. Besonders bevorzugt tragen die Silyl-Gruppen 1 bis 3, noch mehr bevorzugt 1 bis 2 und am meisten bevorzugt 2 Alkyl-Reste.

Die Silyl-Gruppen können gegebenenfalls substituiert sein, beispielsweise mit einem oder mehreren Halogenen, insbesondere mit Fluor. Bevorzugt sind die Silyl-Gruppen mit 1 bis 3, besonders bevorzugt 1 bis 2 und am meisten bevorzugt mit einem Halogen substituiert.

Beispiele für silylierte Nitrile sind 3-(Fluoro-dimethyl-silyl)-butan-nitril (FSN), 3-(Fluoro-dimethyl-silyl)-propan-nitril, 3-(Fluoro-dimethyl-silyl)-pentan-nitril, 3-(Fluoro-methyl-silyl)-butan-nitril, 3-(Di-Fluoro-methyl-silyl)-butan-nitril. Bevorzugt ist 3-(Fluoro-dimethyl-silyl)-butan-nitril (FSN).

Nitrile haben einen Siedepunkt von vorzugsweise ≥ 120°C bei 1013 hPa, besonders bevorzugt ≥ 150°C bei 1013 hPa.

Vorzugsweise enthält der Elektrolyt 0,5 bis 20 Gewichtsteile, besonders bevorzugt 1 bis 15 Gewichtsteile und am meisten 2 bis 10 Gewichtsteile Nitril.

Des Weiteren kann der Elektrolyt zusätzlich ein oder mehrere aprotische Lösungsmittel, ein oder mehrere lithiumhaltige Leitsalze, gegebenenfalls Filmbildner und gegebenenfalls ein oder mehrere Additive enthalten.

Das aprotische Lösungsmittel wird vorzugsweise ausgewählt aus der Gruppe umfassend organische Carbonate, wie Dimethylcarbonat, Diethylcarbonat, Ethylmethylcarbonat, Ethylencarbonat, Vinylencarbonat, Propylencarbonat, Butylencarbonat; cyclische und lineare Ester, wie Methylacetat, Ethylacetat, Butylacetat, Propylpropionat, Ethylbutyrat, Ethyl-isobutyrat; cyclische und lineare Ether, wie 2-Methyltetrahydrofuran, 1,2-Diethoxymethan, THF, Dioxan, 1,3-Dioxolan, Diisopropylether, Diethylenglycoldimethylether; Ketone, wie Cyclopentanon, Di-isopropylketon, Methyl-isobutylketon; Lactone, wie γ-Butyrolacton; Sulfolane, Dimethylsulfoxid, Formamid, Dimethylformamid, 3-Methyl-1,3-oxazolidine-2-on und Gemischen dieser Lösungsmittel. Besonders bevorzugt sind die vorstehend beschriebenen organischen Carbonate.

Der Elektrolyt enthält vorzugsweise 100 Gewichtsteile aprotisches Lösungsmittel.

Das lithiumhaltige Leitsalz wird vorzugsweise ausgewählt aus der Gruppe umfassend $LiPF_6$, $LiBF_4$, $LiClO_4$, $LiAsF_6$, ($LiB(C_2O_4)_2$, $LiBF_2(C_2O_4)$), $LiSO_3C_xF_{2x+1}$, $LiN(SO_2C_xF_{2x+1})_2$ und $LiC(SO_2CxF_{2x+1})_3$, wobei x ganzzahlige Werte von 0 bis 8 einnimmt, und deren Mischungen.

Der Elektrolyt enthält vorzugsweise 1 bis 50 Gewichtsteile, besonders bevorzugt 5 bis 30 Gewichtsteile und am meisten bevorzugt 10 bis 20 Gewichtsteile lithiumhaltiges Leitsalz.

Beispiele für Filmbildner sind Vinylencarbonat und Fluorethylencarbonat. Mit Filmbildnern kann eine signifikante Verbesserung der Zyklenfestigkeit der erfindungsgemäßen, Siliciumpartikel enthaltenden Anode erreicht werden. Dies wird hauptsächlich der Bildung einer festen Elektrolytzwischenphase auf der Oberfläche von aktiven Partikeln zugeschrieben.

Der Elektrolyt enthält vorzugsweise 5 bis 100 Gewichtsteile, mehr bevorzugt 10 bis 70 Gewichtsteile, besonders bevorzugt 20 bis 50 Gewichtsteile und am meisten bevorzugt 12 bis 30 Gewichtsteile Filmbildner.

Beispiele für Additive sind organische Isocyanate, beispielsweise zur Herabsetzung des Wassergehaltes, HF-Abfänger, Lösungsvermittler für LiF, organische Lithiumsalze und/oder Komplexsalze.

Das Anodenmaterial enthält Siliciumpartikel.

Die volumengewichtete Partikelgrößenverteilung der Siliciumpartikel liegt vorzugsweise zwischen den Durchmesser-Perzentilen $d_{10} \geq 0{,}2\ \mu m$ und $d_{90} \leq 20{,}0\ \mu m$, besonders bevorzugt zwischen $d_{10} \geq 0{,}2\ \mu m$ und $d_{90} \leq 10{,}0\ \mu m$ und am meisten bevorzugt zwischen $d_{10} \geq 0{,}2\ \mu m$ bis $d_{90} \leq 5{,}0\ \mu m$. Die Siliciumpartikel haben eine volumengewichtete Partikelgrößenverteilung mit Durchmesser-Perzentilen $d_{10}$ von vorzugsweise $\leq 10\ \mu m$, besonders bevorzugt $\leq 5\ \mu m$, noch mehr bevorzugt $\leq 3\ \mu m$ und am meisten bevorzugt $\leq 1\ \mu m$. Die Siliciumpartikel haben eine volumengewichtete Partikelgrößenverteilung mit Durchmesser-Perzentilen $d_{90}$ von vorzugsweise $\geq 0{,}5\ \mu m$. In einer Ausführungsform der vorliegenden Erfindung ist der vorgenannte $d_{90}$-Wert vorzugsweise $\geq 5\ \mu m$.

Die volumengewichtete Partikelgrößenverteilung der Siliciumpartikel hat eine Breite $d_{90}\text{-}d_{10}$ von vorzugsweise $\leq 15{,}0\ \mu m$, mehr bevorzugt $\leq 12{,}0\ \mu m$, noch mehr bevorzugt $\leq 10{,}0\ \mu m$, besonders bevorzugt $\leq 8{,}0\ \mu m$ und am meisten bevorzugt $\leq 4{,}0\ \mu m$. Die volumengewichtete Partikelgrößenverteilung der Siliciumpartikel hat eine Breite $d_{90}\text{-}d_{10}$ von vorzugsweise $\geq 0{,}6\ \mu m$, besonders bevorzugt $\geq 0{,}8\ \mu m$ und am meisten bevorzugt $\geq 1{,}0\ \mu m$.

Die volumengewichtete Partikelgrößenverteilung der Siliciumpartikel weist Durchmesser-Perzentilen $d_{50}$ von vorzugsweise 0,5 bis 10,0 $\mu m$, besonders bevorzugt 0,6 bis 7,0 $\mu m$, noch mehr bevorzugt 2,0 bis 6,0 $\mu m$ und am meisten bevorzugt 0,7 bis 3,0 $\mu m$ auf.

Das Zweifache bis Fünffache, insbesondere das Zweifache bis Dreifache der vorgenannten $d_{50}$-Werte ist vorzugsweise kleiner als die Schichtdicke der Anodenbeschichtung. Die Schichtdicke der Anodenbeschichtung ist weiter unten angegeben. Diese Maßgabe ist hilfreich, um Überkorn praktisch auszuschließen.

Die volumengewichtete Partikelgrößenverteilung der Siliciumpartikel ist bestimmbar durch statische Laserstreuung unter Anwendung des Mie-Modells mit dem Messgerät Horiba LA 950 mit Ethanol als Dispergiermedium für die Siliciumpartikel.

Die volumengewichtete Partikelgrößenverteilung der Siliciumpartikel ist vorzugsweise monomodal. Die volumengewichtete Partikelgrößenverteilung der Siliciumpartikel ist im Allgemeinen eng, wie aus den $d_{10}$- oder $d_{90}$-Werten sowie $d_{90}\text{-}d_{10}$-Werten zu ersehen ist.

Die Siliciumpartikel sind nicht aggregiert, vorzugsweise nicht agglomeriert und/oder vorzugsweise nicht nanostrukturiert. Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Diese Aggregate können im weiteren Reaktionsverlauf Agglomerate bilden. Agglomerate sind eine lose Zusammenballung von Aggregaten. Agglomerate können mit typischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Sphärizitäten und Kornformen als die erfindungsgemäßen Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Nicht nanostrukturierte Siliciumpartikel haben im Allgemeinen charakteristische BET-Oberflächen. Die BET-Oberflächen der Siliciumpartikel betragen vorzugsweise 0,01 bis 30,0 $m^2/g$, mehr bevorzugt 0,1 bis 25,0 $m^2/g$, besonders bevorzugt 0,2 bis 20,0 $m^2/g$ und am meisten bevorzugt 0,2 bis 18,0 $m^2/g$. Die BET-Oberfläche wird gemäß DIN 66131 (mit Stickstoff) bestimmt.

Die Siliciumpartikel haben eine Sphärizität von vorzugsweise $0{,}3 \leq \psi \leq 0{,}9$, besonders bevorzugt $0{,}5 \leq \psi \leq 0{,}85$ und am meisten bevorzugt $0{,}65 \leq \psi \leq 0{,}85$. Siliciumpartikel mit solchen Sphärizitäten werden insbesondere durch Herstellung mittels Mahlprozessen zugänglich. Die Sphärizität $\psi$ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids $SiO_x$ bevorzugt im Bereich $0 < x < 1,3$. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung $M_ySi$ bevorzugt im Bereich $0 < y < 5$. Die Siliciumpartikel können gegebenenfalls prälithiiert sein. Für den Fall, dass die Siliciumpartikel mit Lithium legiert sind, liegt die Stöchiometrie der Legierung $Li_zSi$ bevorzugt im Bereich $0 < z < 2,2$.

Besonders bevorzugt sind Siliciumpartikel die im Inneren $\geq 80$ Mol-% Silicium und/oder $\leq 20$ Mol-% Fremdatome, ganz besonders bevorzugt $\leq 10$ Mol-% Fremdatome enthalten.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene. Durch die organischen Gruppen kann beispielsweise die Oberflächenspannung der Siliciumpartikel gesteuert werden und insbesondere an die Lösemittel oder Bindemittel angepasst werden, die gegebenenfalls bei der Herstellung der Anodenbeschichtungen eingesetzt werden.

Der Siliciumanteil im Anodenmaterial liegt vorzugsweise zwischen 40 Gew.-% und 95 Gew.-%, besonders bevorzugt zwischen 50 Gew.-% und 90 Gew.-% und am meisten bevorzugt zwischen 60 Gew.-% und 80 Gew.-%, bezogen auf das Gesamtgewicht des Anodenmaterials.

Die Siliciumpartikel können beispielsweise durch Mahlprozesse hergestellt werden. Die geläufige Gasphasenabscheidung ist dagegen im Allgemeinen ungeeignet zur Herstellung erfindungsgemäß ausgestalteter Siliciumpartikel.

Durch Mahlprozesse sind Siliciumpartikel mit den erfindungsgemäßen Eigenschaften zugänglich, beispielsweise mit vorteilhaften Sphärizitäten, wie den in der Anwendung vorteilhaften Bruchflächen, insbesondere scharfkantigen Bruchflächen, oder beispielsweise splitterförmige Siliciumpartikel. Auch die erfindungswesentlichen Partikelgrößenverteilungen der Siliciumpartikel und nicht-aggregierte Siliciumpartikel sind durch Mahlprozesse sehr gut zugänglich.

Durch Gasphasenprozesse hergestellte Siliciumpartikel haben dagegen im Allgemeinen eine runde oder nadelförmige Gestalt. Bei der Gasphasenabscheidung kommt es typischerweise zur Aggregation der Partikel. Um nicht-aggregierte Siliciumpartikel mittels Gasphasenprozessen herzustellen, müssten die Gasphasenreaktoren mit extrem niedrigen Gaskonzentrationen oder extrem kurzen Reaktorverweilzeiten betrieben werden, was aber die Bildung von Siliciumpartikeln mit der erfindungsgemäßen μ-skaligen Partikelgröße konterkariert und zu technisch unrentablen Produktionszeiten führt. Wenn dagegen aggregierte Siliciumpartikel gewünscht sind, sind Gasphasenprozesse bestens geeignet für die Herstellung μ-skaliger Si-Aggregate mit Primärpartikelgröße im Nanometerbereich.

Als Mahlprozesse kommen beispielsweise Trocken- oder Nassmahlprozesse in Betracht. Hierbei werden vorzugsweise Planetenkugelmühlen, Strahlmühlen, wie Gegenstrahl oder Prallmühlen, oder Rührwerkskugelmühlen eingesetzt.

Die Vermahlung in der Strahlmühle erfolgt bevorzugt mit Stickstoff oder Edelgasen, bevorzugt Argon, als Mahlgas. Die Strahlmühlen weisen bevorzugt einen integrierten Windsichter auf, der statisch oder dynamisch ausgebildet sein kann, oder sie werden im Kreislauf mit einem externen Windsichter betrieben.

Für das Mahlen zur Herstellung der Siliciumpartikel in Suspension können ein oder mehrere organische oder anorganische Flüssigkeiten oder flüssige Gemische verwendet werden. Vorzugsweise haben solche Flüssigkeiten oder flüssigen Gemische bei Raumtemperatur eine Viskosität von bevorzugt unter 100 mPas und besonders bevorzugt unter 10 mPas. Bevorzugt sind die Flüssigkeiten oder flüssigen Gemische inert oder schwach reaktiv gegenüber Silicium. Besonders bevorzugt ist die Flüssigkeit organisch und enthält weniger als 5 Gew.-% Wasser, besonders bevorzugt weniger als 1 Gew.-% Wasser. Als organische Flüssigkeiten sind Kohlenwasserstoffe, Ester oder insbesondere Alkohole bevorzugt. Die Alkohole enthalten vorzugsweise 1 bis 7 und besonders bevorzugt 2 bis 5 Kohlenstoffatome. Beispiele für Alkohole sind Methanol, Ethanol, Propanol und Butanol. Bevorzugt sind Ethanol und 2-Propanol. Kohlenwasserstoffe enthalten vorzugsweise 5 bis 10 und besonders bevorzugt 6 bis 8 Kohlenstoffatome. Kohlenwasserstoffe können beispielsweise aliphatisch oder aromatisch sein. Beispiele für Kohlenwasserstoffe sind Toluol und Heptan. Bei Estern handelt es sich im Allgemeinen um Ester von Carbonsäuren und Alkylalkoholen, wie beispielsweise Ethylacetat.

Bei der Herstellung der Siliciumpartikel durch Nassvermahlung in einer Suspension werden vorzugsweise Mahlkörper verwendet, deren mittlerer Durchmesser 10 bis 1000 mal größer ist als der $d_{90}$-Wert der Verteilung des eingesetzten Mahlguts. Besonders bevorzugt sind Mahlkörper, deren mittlerer Durchmesser 20 bis 200-mal größer ist als der $d_{90}$-Wert der Ausgangsverteilung des Mahlguts.

Das Anodenmaterial basiert vorzugsweise auf einer Mischung umfassend Siliciumpartikel, ein oder mehrere Bindemittel, gegebenenfalls Graphit, gegebenenfalls ein oder mehrere weitere elektrisch leitende Komponenten und gegebenenfalls ein oder mehrere Additive.

Durch Einsatz von weiteren elektrisch leitenden Komponenten im Anodenmaterial können die Übergangswiderstände innerhalb der Elektrode und zwischen Elektrode und Stromableiter reduziert werden, was die Strombelastbarkeit der Lithium-Ionen-Batterie verbessert. Bevorzugte weitere elektrisch leitende Komponenten sind Leitruß, Kohlenstoff-Nanoröhrchen oder metallische Partikel, beispielsweise Kupfer.

Das Anodenmaterial enthält vorzugsweise 0 bis 40 Gew.-%, besonders bevorzugt 0 bis 30 Gew.-% und am meisten bevorzugt 0 bis 20 Gew.-% an einer oder mehreren weiteren elektrisch leitenden Komponenten, bezogen auf das Gesamtgewicht des Anodenmaterials.

Bevorzugte Bindemittel sind Polyacrylsäure oder deren Alkali-Salze, insbesondere Lithium- oder Natrium-Salze, Polyvinylalkohole, Cellulose oder Cellulosederivate, Polyvinylidenfluorid, Polytetrafluorethylen, Polyolefine, Polyimide, insbesondere Polyamidimide, oder thermoplastische Elastomere, insbesondere Ethylen-Propylen-Dien-Terpolymere. Besonders bevorzugt sind Polyacrylsäure, Polymethacrylsäure oder Cellulose-Derivate, insbesondere Carboxymethylcellulose. Besonders bevorzugt sind auch die Alkali-Salze, insbesondere Lithium- oder Natrium-Salze, der vorgenannten Bindemittel. Am meisten bevorzugt sind die Alkali-Salze, insbesondere Lithium- oder Natrium-Salze, der Polyacrylsäure oder der Polymethacrylsäure. Es können sämtliche oder vorzugsweise ein Anteil der Säure-Gruppen eines Bindemittels in Form von Salzen vorliegen. Die Bindemittel haben eine Molmasse von vorzugsweise 100.000 bis 1.000.000 g/mol. Es können auch Gemische von zwei oder mehr Bindemitteln eingesetzt werden.

Als Graphit kann allgemein natürlicher oder synthetischer Graphit eingesetzt werden. Die Graphitpartikel haben bevorzugt eine volumengewichtete Partikelgrößenverteilung zwischen den Durchmesser-Perzentilen $d_{10} > 0,2\,\mu m$ und $d_{90} < 200\,\mu m$.

Beispiele für Additive sind Porenbildner, Dispergiermittel, Verlaufsmittels oder Dotiermittel, beispielsweise elementares Lithium.

Bevorzugte Rezepturen für das Anodenmaterial der Lithium-Ionen-Batterien enthalten vorzugsweise 5 bis 95 Gew.-%, insbesondere 60 bis 85 Gew.-% Siliciumpartikel; 0 bis 40 Gew.-%, insbesondere 0 bis 20 Gew.-% weitere elektrisch leitende Komponenten; 0 bis 80 Gew.-%, insbesondere 5 bis 30 Gew.-% Graphit; 0 bis 25 Gew.-%, insbesondere 5 bis 15 Gew.-% Bindemittel; und gegebenenfalls 0 bis 80 Gew.-%, insbesondere 0,1 bis 5 Gew.-% Additive; wobei sich die Angaben in Gew.-% auf das Gesamtgewicht des Anodenmaterials beziehen und sich die Anteile aller Bestandteile des Anodenmaterials auf 100 Gew.-% aufsummieren.

In einer bevorzugten Rezeptur für das Anodenmaterial ist der Anteil von Graphitpartikeln und weiteren elektrisch leitenden Komponenten in Summe mindestens 10 Gew.-%, bezogen auf das Gesamtgewicht des Anodenmaterials.

Die Verarbeitung der Bestandteile des Anodenmaterials zu einer Anodentinte bzw. -paste kann beispielsweise in einem Lösungsmittel, wie Wasser, Hexan, Toluol, Tetrahydrofuran, N-Methylpyrrolidon, N-Ethylpyrrolidon, Aceton, Ethylacetat, Dimethylsulfoxid, Dimethylacetamid oder Ethanol, oder Lösungsmittelgemischen vorzugsweise unter Verwendung von Rotor-Stator-Maschinen, Hochenergiemühlen, Planetenknetern, Rührwerkskugelmühlen, Rüttelplatten oder Ultraschallgeräten erfolgen.

Die Anodentinte bzw. -paste weist einen pH-Wert auf von vorzugsweise 2 bis 7,5 (bestimmt bei 20°C, beispielsweise mit dem pH-Meter von WTW pH 340i mit Sonde SenTix RJD).

Die Anodentinte oder -paste kann beispielsweise auf eine Kupferfolie oder einen anderen Stromsammler aufgerakelt werden. Andere Beschichtungsverfahren, wie z.B. Rotationsbeschichtung (Spin-Coating), Rollen-, Tauch- oder Schlitzdüsenbeschichtung, Streichen oder Sprühen, können ebenso verwendet werden.

Die Schichtdicke, das heißt die Trockenschichtdicke der Anodenbeschichtung ist bevorzugt 2 $\mu m$ bis 500 $\mu m$, besonders bevorzugt von 10 $\mu m$ bis 300 $\mu m$.

Das Anodenmaterial wird im Allgemeinen bis zur Gewichtskonstanz getrocknet. Die Trocknungstemperatur richtet sich nach den eingesetzten Komponenten und dem verwendeten Lösungsmittel. Sie liegt bevorzugt zwischen 20°C und 300°C, besonders bevorzugt zwischen 50°C und 150°C.

Abschließend können die Elektrodenbeschichtungen kalandriert werden, um eine definierte Porosität einzustellen.

Als bevorzugte Kathodenmaterialien können beispielsweise Lithiumcobaltoxid, Lithiumnickeloxid, Lithiumnickelcobaltoxid (dotiert oder nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat, oder Lithiumvanadiumoxide eingesetzt werden.

Der Separator ist im Allgemeinen eine elektrisch isolierende, für Ionen durchlässige Membran, wie sie in der Batterieherstellung gebräuchlich ist. Der Separator trennt bekanntermaßen die erste Elektrode von der zweiten Elektrode und verhindert somit elektronisch leitende Verbindungen zwischen den Elektroden (Kurzschluss).

Eine Lithium-Ionen-Batterie umfasst im Allgemeinen eine erste Elektrode als Kathode, eine zweite Elektrode als Anode, eine zwischen beiden Elektroden angeordnete Membran als Separator, zwei elektrisch leitende Anschlüsse an den Elektroden, ein die genannten Teile aufnehmendes Gehäuse sowie einen Lithium-Ionen enthaltenden Elektrolyten, mit dem der Separator und die beiden Elektroden getränkt sind, wobei ein Teil der zweiten Elektrode das erfindungsgemäße Anodenmaterial enthält.

Die erfindungsgemäße Lithium-Ionen-Batterie kann in allen üblichen Formen, beispielsweise in gewickelter, gefalteter oder gestapelter Form hergestellt werden.

Alle zur Herstellung der erfindungsgemäßen Lithium-Ionen-Batterie, wie oben beschrieben, benutzten Stoffe und Materialien sind bekannt. Die Herstellung der Teile der erfindungsgemäßen Batterie und ihre Zusammenfügung zur erfindungsgemäßen Batterie erfolgt nach den auf dem Gebiet der Batterieherstellung bekannten Verfahren.

Überraschenderweise zeigen die erfindungsgemäßen Lithium-Ionen-Batterien ein verbessertes Zyklenverhalten. Die Lithium-Ionen-Batterien haben einen geringen irreversiblen Kapazitätsverlust im ersten Ladezyklus und ein stabiles elektrochemisches Verhalten mit nur geringfügigem Fading in den Folgezyklen. Insbesondere wird auch der initiale, aus der Zersetzung von Elektrolyt an der Aktivmaterialoberfläche bei erstmaliger Lithiierung unter Schutzschichtbildung (= Solid Electrolyte Interface, SEI) resultierende Lithium-Verlust reduziert. Mit der erfindungsgemäßen Vorgehensweise kann also der initiale sowie der kontinuierliche Kapazitätsverlust der Lithium-Ionen-Batterien minimiert werden. Insgesamt weisen die erfindungsgemäßen Lithium-Ionen-Batterien eine sehr gute Stabilität auf. Dies bedeutet, dass auch bei einer Vielzahl an Zyklen kaum Ermüdungserscheinungen, wie beispielsweise in Folge von mechanischer Zerstörung des erfindungsgemäßen Anodenmaterials oder SEI auftreten, die zu einem Kapazitätsverlust führen.

Überraschenderweise können mit der erfindungsgemäßen Vorgehensweise Lithium-Ionen-Batterien erhalten werden, die neben dem vorgenannten vorteilhaften Zyklenverhalten zugleich noch eine hohe volumetrische Energiedichte besitzen.

Diese Effekte werden durch ein synergistisches Zusammenwirken der erfindungsgemäßen Teil-Lithiierung sowie des erfindungsgemäßen Elektrolyten erreicht werden. Durch die bevorzugten Siliciumpartikel können diese Effekte noch weiter gesteigert werden.

Die nachfolgenden Beispiele dienen zur weiteren Erläuterung der Erfindung:

Beispiel 1:

Herstellung von nicht-aggregierten, splitterförmigen, sub-$\mu$m großen Siliciumpartikeln durch Mahlen:
Zunächst wurden 500 g reines Silicium (Partikelgrößenverteilung: d10 = 8 $\mu$m, d50 = 15 $\mu$m und d90 = 25 $\mu$m; hergestellt durch Mahlen von gröberen Partikeln mit einer Fließbettstrahlmühle) in 2 kg Ethanol (Reinheit 99%) durch 20 minütiges Rühren gleichmäßig suspendiert. Der Mahlraum der Labor-Rührwerkskugelmühle Netzsch LabStar LS1 mit Mahlsystem ZETA Keramik wurde mit 490 ml Yttriumoxid-stabilisierten Zirkonoxid-Mahlperlen (mittlerer Durchmesser: 0,3 mm) befüllt und verschlossen. Die Suspension aus Silicium und Ethanol wurde in den gekühlten (15°C) Ansatzbehälter der Mühle gefüllt und mit einem Durchsatz von 40 kg/h im Kreis durch die Mühle gepumpt. Es wurde für 55 min bei einer Mühlendrehzahl von 3000 U/min gemahlen. Nach dem Mahlvorgang wurde der Suspension Ethanol zugesetzt, bis ihre Feststoffkonzentration 21,8 Gew.-% betrug. Die Messung der Partikelverteilung durch statische Laserstreuung unter Anwendung des Mie-Modells mit einem Horiba LA 950 in einer stark verdünnten Suspension in Ethanol ergab d10 = 0,26 $\mu$m, d50 = 0,79 $\mu$m und d90 = 2,30 $\mu$m sowie eine Breite (d90-d10) von 2,0 $\mu$m.

Beispiel 2:

Herstellung einer Anode mit den Siliciumpartikeln aus Beispiel 1 und Natrium-Carboxymethylcellulose als Binder:
11,0 g der Suspension von Silicium in Ethanol aus Beispiel 1 (Feststoffkonzentration: 21,8 Gew.-%) wurden in 12,52 g einer 1,4 Gew.-%igen Lösung von Natrium-Carboxymethylcellulose (Daicel, Grade 1380) in Wasser mittels Dissolver bei einer Umlaufgeschwindigkeit von 4,5 m/s für 5 min und von 17 m/s für 30 min unter Kühlung bei 20°C dispergiert. Nach Zugabe von 0,856 g Graphit (Imerys, KS6L C) wurde dann weitere 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,90 mg/cm$^2$.

Beispiel 3 (Bsp.3):

Lithium-Ionen-Batterie mit der Anode aus Beispiel 2:
Die elektrochemischen Untersuchungen wurden an einer Knopfzelle (Typ CR2032, Hohsen Corp.) in 2-Elektroden-Anordnung durchgeführt. Die Elektrodenbeschichtung aus Beispiel 2 wurde als Gegenelektrode bzw. negative Elektrode (Dm = 15 mm) eingesetzt, eine Beschichtung auf Basis von Lithium-Nickel-Mangan-Kobaltoxid 1:1:1 mit Gehalt von 94,0 % und mittlerem Flächengewicht von 14,5 mg/cm2 (bezogen von der Firma Custom Cells) als Arbeitselektrode bzw. positive Elektrode (Dm = 15 mm) verwendet. Ein mit 120 $\mu$l Elektrolyt getränktes, Glasfaser-Filterpapier (Whatman, GD Type D) diente als Separator (Dm = 16 mm). Der verwendete Elektrolyt bestand aus einer 1,0-molaren Lösung von Lithiumhexafluorophosphat in einem 3:7 (v/v) Gemisch von Vinylencarbonat und Diethylcarbonat, welche mit 10,0 Gew.-% Fluoro-dimethyl-silyl-butan-nitril und 2,0 Gew.-% Tributylamin versetzt war. Der Bau der Zelle erfolgte in einer Glovebox (< 1 ppm $H_2O$, $O_2$), der Wassergehalt in der Trockenmasse aller verwendeten Komponenten lag unterhalb von 20 ppm.

Die elektrochemische Testung wurde bei 20°C durchgeführt.

Das Laden der Zelle erfolgte im cc/cv-Verfahren (constant current / constant voltage) mit konstantem Strom von 5 mA/g (entspricht C/25) im ersten Zyklus und von 60 mA/g (entspricht C/2) in den darauffolgenden Zyklen und nach Erreichen der Spannungsgrenze von 4,2 V mit konstanter Spannung bis Unterschreiten eines Stroms von 1,2 mA/g (entspricht C/100) bzw. 15 mA/g (entspricht C/8). Das Entladen der Zelle erfolgte im cc-Verfahren (constant current) mit konstantem Strom von 5 mA/g (entspricht C/25) im ersten Zyklus und von 60 mA/g (entspricht C/2) in den darauffolgenden Zyklen bis Erreichen der Spannungsgrenze von 3,0 V.

Der gewählte spezifische Strom bezog sich auf das Gewicht der Beschichtung der positiven Elektrode.

Auf Grund der Rezeptierung in den Beispielen 2 und 3 wurde die Lithium-Ionen-Batterie durch Zellbalancing unter Teil-Lithiierung der Anode betrieben.

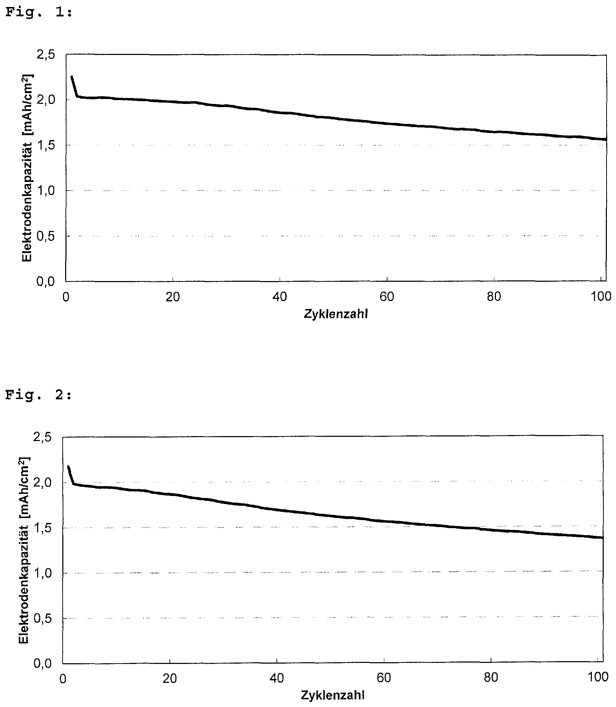

Fig. 1 zeigt die Entladekapazität der Vollzelle von Beispiel 3 in Abhängigkeit von der Zyklenzahl. Die Vollzelle hat im zweiten Zyklus eine reversible Anfangskapazität von 2,04 mAh/cm$^2$ und besitzt nach 85 Lade-/Entladezyklen noch 80% ihrer ursprünglichen Kapazität.

Vergleichsbeispiel 4 (VBsp.4):

Lithium-Ionen-Batterie mit der Anode aus Beispiel 2, aber nicht-erfindungsgemäßem Elektrolyt:

Die Anode aus Beispiel 2 wurde analog zu Beispiel 3 getestet. Der verwendete Elektrolyt bestand jedoch aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war.

Fig. 2 zeigt die Entladekapazität der Vollzelle von Vergleichsbeispiel 4 in Abhängigkeit von der Zyklenzahl. Die Vollzelle hat im zweiten Zyklus eine reversible Anfangskapazität von 1,99 mAh/cm2 und besitzt schon nach 60 Lade-/Entladezyklen nur noch 80% ihrer ursprünglichen Kapazität.

Beispiel 5:

Herstellung von nanoskaligen, splitterförmigen, nicht-aggregierten Siliciumpartikeln durch Mahlen:

Analog zu Beispiel 1, jedoch mit einer Mahldauer von 600 min. Es wurden nanoskalige, splitterförmige, nicht-aggregierte Siliciumpartikel erhalten. Der Feststoffgehalt der Suspension wurde durch Zugabe von Ethanol auf 22,3 Gew.-% eingestellt.

Die Messung der Partikelverteilung durch statische Laserstreuung unter Anwendung des Mie-Modells mit einem Horiba LA 950 in einer stark verdünnten Suspension in Ethanol ergab eine Größenverteilung mit d10 = 0,09 $\mu$m, d50 = 0,18 $\mu$m und d90 = 0,32 $\mu$m.

Beispiel 6:

Herstellung einer Anode mit den Siliciumpartikeln aus Vergleichsbeispiel 5 und Natrium-Carboxymethylcellulose als Binder:

3,03 g der Suspension von Silicium in Ethanol aus Vergleichsbeispiel 4 (Feststoffkonzentration: 22,3 Gew.-%) und 0,41 g Leitruß (Imerys, Super P Li) wurden in 19,35 g einer 1,4 Gew.-%igen Lösung von Natrium-Carboxymethylcellulose (Daicel, Grade 1380) in Wasser mittels Dissolver bei einer Umlaufgeschwindigkeit von 4,5 m/s für 15 min und von 17 m/s für 45 min unter Kühlung bei 20°C dispergiert. Nach Zugabe von 2,04 g Graphit (Imerys, SFG6) wurde dann 30 min bei einer Umlaufgeschwindigkeit von 12 m/s gerührt. Nach Entgasen wurde die Dispersion mittels eines Filmziehrahmens mit 0,20 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,18 mg/cm$^2$.

Vergleichsbeispiel 7 (VBsp.7):

Lithium-Ionen-Batterie mit der Anode aus Vergleichsbeispiel 6: Die Anode aus Vergleichsbeispiel 6 mit splitterförmigen nanoskaligen Siliciumpartikeln wurde wie in Beispiel 3 beschrieben getestet.

Auf Grund der Rezeptierung in Vergleichsbeispiel 6 wurde die Lithium-Ionen-Batterie unter maximaler Lithiierung der Anode betrieben.

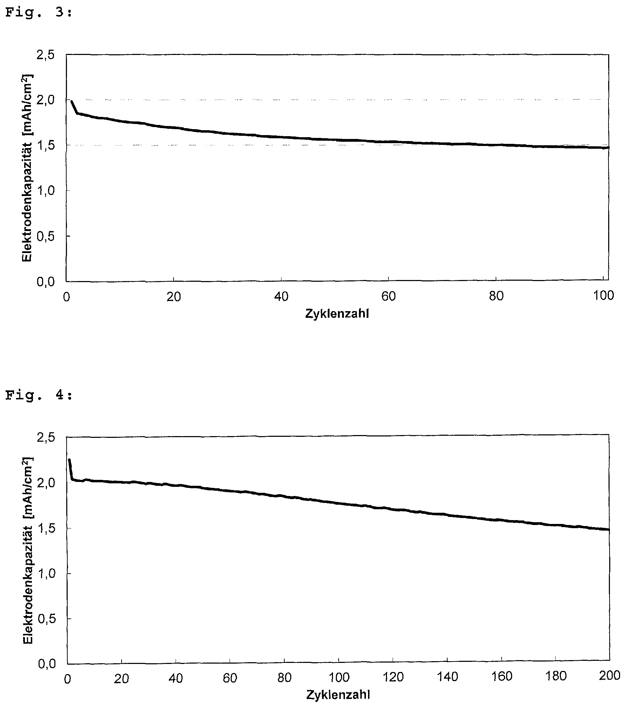

Fig. 3 zeigt die Entladekapazität der Vollzelle von Vergleichsbeispiel 7 in Abhängigkeit von der Zyklenzahl. Die Vollzelle hat im zweiten Zyklus eine reversible Anfangskapazität von nur 1,85 mAh/cm$^2$ und besitzt nach 88 Lade-/Entladezyklen noch 80% ihrer ursprünglichen Kapazität.

Beispiel 8:

Herstellung einer Anode mit den Siliciumpartikeln aus Beispiel 1 und Lithium-Polyacrylsäure als Binder: 12,5 g einer 14,4 Gew.-%igen Suspension von Silicium in Wasser, hergestellt aus einem Zentrifugat der ethanolischen Silicium-Suspension aus Beispiel 1, wurden in 0,372 g einer 35 Gew.-%igen Lösung von Polyacrylsäure in Wasser (bezogen von Sigma-Aldrich, Mw 250.000 g/mol) und 0,056 g Lithiumhydroxid Monohydrat (bezogen von Sigma-Aldrich) mittels Dissolver bei einer Umlaufgeschwindigkeit von 4,5 m/s für 5 min und von 17 m/s für 30 min unter Kühlung bei 20°C dispergiert. Nach Zugabe von 0,645 g Graphit (Imerys, KS6L C) wurde dann weitere 30 min bei einer Umlaufgeschwindigkeit von 12 m/s gerührt. Nach Entgasen wurde die Dispersion mittels eines Filmziehrahmens mit 0,12 mm Spalthöhe (Erichsen, Modell 360) auf eine Kupferfolie mit Dicke von 0,030 mm (Schlenk Metallfolien, SE-Cu58) aufgebracht. Die so hergestellte Anodenbeschichtung wurde anschließend 60 min bei 80°C und 1 bar Luftdruck getrocknet. Das mittlere Flächengewicht der trockenen Anodenbeschichtung betrug 2,73 mg/cm$^2$.

Beispiel 9 (Bsp.9):

Lithium-Ionen-Batterie mit der Anode aus Beispiel 8:
Die Anode aus Beispiel 8 wurde wie in Beispiel 3 beschrieben getestet.
Fig. 4 zeigt die Entladekapazität der Vollzelle von Beispiel 9 in Abhängigkeit von der Zyklenzahl. Die Vollzelle hat im zweiten Zyklus eine reversible Anfangskapazität von 2,04 mAh/cm$^2$ und besitzt nach 135 Lade-/Entladezyklen immer noch 80% ihrer ursprünglichen Kapazität.

Vergleichsbeispiel 10:

Lithium-Ionen-Batterie mit der Anode aus Beispiel 8, aber nicht-erfindungsgemäßem Elektrolyt:
Die Anode aus Beispiel 8 wurde analog zu Beispiel 3 getestet. Der verwendete Elektrolyt bestand jedoch aus einer 1,0-molaren Lösung von Lithiumhexafluorophosphat in einem 3:7 (v/v) Gemisch von Fluorethylencarbonat und Ethylmethylcarbonat, welche mit 2,0 Gew.-% Vinylencarbonat versetzt war.

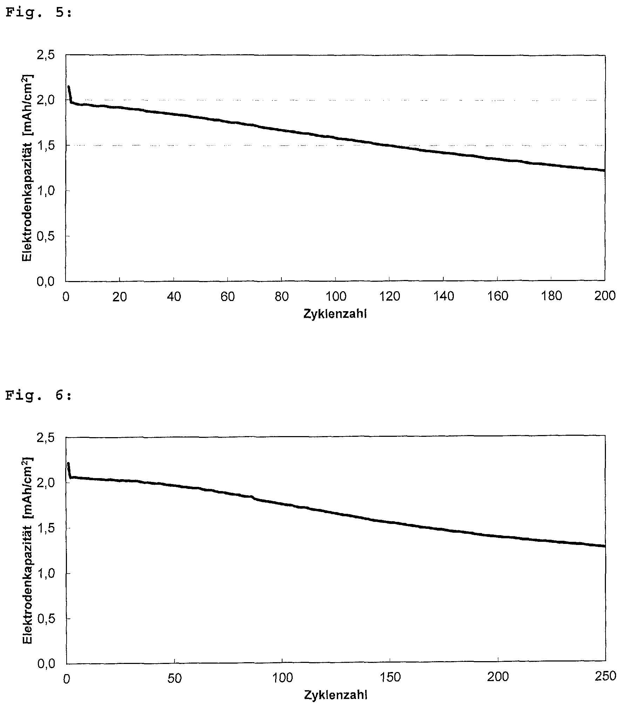

Fig. 5 zeigt die Entladekapazität der Vollzelle von Vergleichsbeispiel 10 in Abhängigkeit von der Zyklenzahl. Die Vollzelle hat im zweiten Zyklus eine reversible Anfangskapazität von 1,97 mAh/cm$^2$ und besitzt schon nach 100 Lade-/Entladezyklen nur noch 80% ihrer ursprünglichen Kapazität.

Beispiel 11:

Lithium-Ionen-Batterie analog zu Beispiel 8, aber mit anderer Elektrolyt-Zusammensetzung:
Die Anode aus Beispiel 8 wurde analog zu Beispiel 3 getestet.
Der verwendete Elektrolyt bestand jedoch aus einer 1,0-molaren Lösung von Lithiumhexafluorophosphat in einem 3:7 (v/v) Gemisch von Vinylencarbonat und Diethylcarbonat, welche mit 2,0 Gew.-% Tributylamin versetzt war.
Fig. 6 zeigt die Entladekapazität der Vollzelle von Beispiel 11 in Abhängigkeit von der Zyklenzahl. Die Vollzelle hat im zweiten Zyklus eine reversible Anfangskapazität von 2,03 mAh/cm$^2$ und besitzt nach 125 Lade-/Entladezyklen noch 80% ihrer ursprünglichen Kapazität.

Vergleichsbeispiel 12 (VBsp.12):

Lithium-Ionen-Batterie mit der Anode aus Beispiel 8 mit dem Unterschied, dass das mittlere Flächengewicht der trockenen Anodenbeschichtung 0,82 mg/cm$^2$ betrug.
Die Anode wurde wie in Beispiel 3 beschrieben getestet.
Auf Grund ihrer Rezeptierung wurde die Lithium-Ionen-Batterie in Vergleichsbeispiel 12 unter maximaler Lithiierung der Anode betrieben.

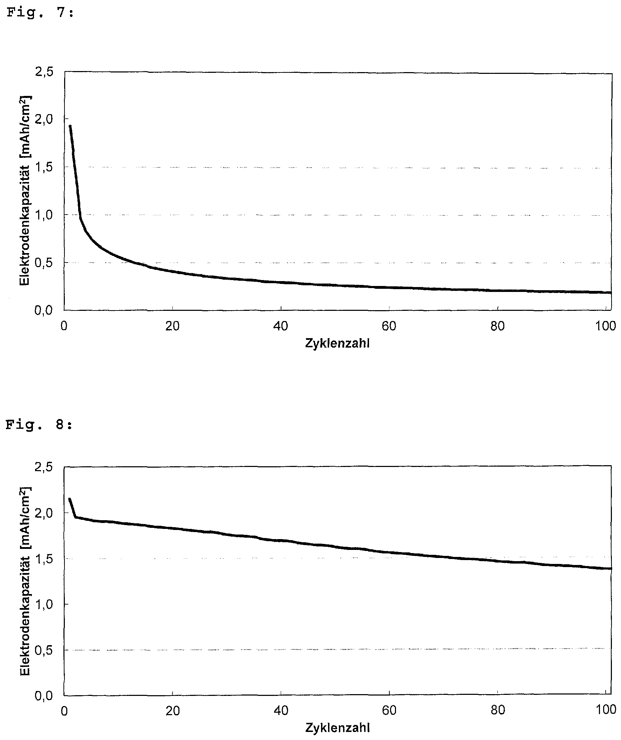

Fig. 7 zeigt die Entladekapazität der Vollzelle von Vergleichsbeispiel 12 in Abhängigkeit von der Zyklenzahl. Die Vollzelle hat im zweiten Zyklus nur eine reversible Anfangskapazität von 1,45 mAh/cm$^2$ und besitzt nach nur einem Lade-/Entladezyklus weniger als 80% ihrer ursprünglichen Kapazität.

Vergleichsbeispiel 13 (VBsp.13):

Lithium-Ionen-Batterie mit der Anode aus Beispiel 2, aber nicht-erfindungsgemäßem Elektrolyt:
Die Anode aus Beispiel 2 wurde analog zu Beispiel 3 getestet. Der verwendete Elektrolyt bestand jedoch aus einer 1,0-molaren Lösung von Lithiumhexafluorophosphat in einem 3:7 (v/v) Gemisch von Fluorethylencarbonat und Ethylmethylcarbonat. Der Elektrolyt enthielt also keinen Filmbildner (Vinylencarbonat).

Fig. 8 zeigt die Entladekapazität der Vollzelle von Vergleichsbeispiel 13 in Abhängigkeit von der Zyklenzahl. Die Vollzelle hat im zweiten Zyklus eine reversible Anfangskapazität von 1,95 mAh/cm$^2$ und besitzt schon nach 59 Lade-/Entladezyklen nur noch 80% ihrer ursprünglichen Kapazität.

In der Tabelle sind die Austestungsergebnisse mit den Lithium-Ionen-Batterien der Beispiele 3, 9 bzw. 11 sowie den Vergleichsbeispielen 4, 7, 10, 12 bzw. 13 zusammengefasst.

Die Lithium-Ionen-Batterien von Beispiel 3, 9 bzw. 11 zeigen im Vergleich zu den Lithium-Ionen-Batterien der Vergleichsbeispiele 4, 7, 10, 12 bzw. 13 überraschenderweise eine hohe initiale Kapazität (nach Zyklus 1) und ein stabileres elektrochemisches Verhalten in den Folgezyklen.

Tabelle: Austestungsergebnisse mit den Lithium-Ionen-Batterien der Beispiele 3, 9 bzw. 11 sowie der Vergleichsbeispiele 4, 7, 10, 12 bzw. 13:

| (V) Bsp. | $d_{50}$[a] [μm] | Anodenbinder[b] | Elektrolyt | Lithiierung | Entladekapazität nach Zyklus 1 [mAh/cm$^2$] | Zyklenzahl mit ≥ 80% Kapazitätserhalt |
|---|---|---|---|---|---|---|
| 3 | 0,79 | Na-CMC | 1[c] | teilweise | 2,04 | 85 |
| 13 | 0,79 | Na-CMC | 4[f] | teilweise | 1,95 | 59 |
| 4 | 0,79 | Na-CMC | 2[d] | teilweise | 1,99 | 60 |
| 7 | 0,18 | Na-CMC | 1[c] | maximal | 1,85 | 88 |
| 9 | 0,79 | Li-PAA | 1[c] | teilweise | 2,04 | 135 |
| 10 | 0,79 | Li-PAA | 2[d] | teilweise | 1,97 | 100 |
| 11 | 0,79 | Li-PAA | 3[e] | teilweise | 2,03 | 124 |
| 12 | 0,79 | Li-PAA | 1[c] | maximal | 1,45 | 1 |

a) Partikelgrößenverteilung d50 von Silicium;
b) Na-CMC: Natrium-Carboxymethylcellulose;
Li-PAA: Lithium-Polyacrylsäure;
c) Elektrolyt 1: enthält Fluoro-dimethyl-silyl-butan-nitril und Tributylamin;
d) Elektrolyt 2: enthält kein Amin und kein Nitril; jedoch Vinylencarbonat
e) Elektrolyt 3: enthält Tributylamin, aber kein Nitril;
f) Elektrolyt 4: enthält kein Vinylencarbonat.

**Patentansprüche**

1. Lithium-Ionen-Batterien umfassend Kathode, Siliciumpartikel enthaltende Anode, Separator und Elektrolyt, **dadurch gekennzeichnet, dass**
der Elektrolyt ein oder mehrere Amine enthält und
das Anodenmaterial in der vollständig geladenen Lithium-Ionen-Batterie nur teilweise lithiiert ist,
mit der Maßgabe, dass im teilweise lithiierten Anodenmaterial der vollständig geladenen Batterie das Verhältnis der Lithiumatome zu den Siliciumatomen ≤ 2,2 ist.

2. Lithium-Ionen-Batterien gemäß Anspruch 1, **dadurch gekennzeichnet, dass** im teilweise lithiierten Anodenmaterial der vollständig geladenen Batterie das Verhältnis der Lithiumatome zu den Siliciumatomen ≤ 1,98 und ≥ 0,22 ist.

3. Lithium-Ionen-Batterien gemäß Anspruch 1 oder 2, **dadurch gekennzeichnet, dass** die Kapazität des Siliciums des Anodenmaterials der Lithium-Ionen-Batterie zu ≤ 50% genutzt wird, bezogen auf die maximale Kapazität von 4200 mAh pro Gramm Silicium.

4. Lithium-Ionen-Batterien gemäß Anspruch 1 bis 3, **dadurch gekennzeichnet, dass** der Elektrolyt ein oder mehrere Monoamine und/oder ein oder mehrere Polyamine enthält, wobei Monoamine die allgemeine Formel (I)

$$NR^1R^2R^3 \qquad (I)$$

erfüllen, in der

R$^1$, R$^2$, R$^3$ H oder einwertige Kohlenwasserstoffreste mit 1 bis 30 Kohlenstoffatomen, die substituiert sein können mit Substituenten, die ausgewählt werden aus F-, Cl- und -OR$^4$, und bei denen nicht benachbarte -CH$_2$-Einheiten ersetzt sein können durch Einheiten, die ausgewählt werden aus -C(=O)- und -O-, und R$^4$ einen Alkylrest mit 1 bis 10 Kohlenstoffatomen bedeuten; und

Polyamine die allgemeine Formel (II)

$$R^5_2N\text{-}(CR^6_2)_a\text{-}(NR^7\text{-}(CR^6_2)_b)_c\text{-}NR^5_2 \qquad (II)$$

erfüllen, in der

R$^5$, R$^6$, R$^7$ H oder Kohlenwasserstoffreste mit 1 bis 18 Kohlenstoffatomen, die substituiert sein können mit Substituenten, die ausgewählt werden aus F-, Cl- und -OH, und bei denen nicht benachbarte -CH$_2$-Einheiten ersetzt sein können durch Einheiten, die ausgewählt werden aus -C(=O)- und -O-,
a, b ganzzahlige Werte von 1 bis 6 und
c den Wert 0 oder einen ganzzahligen Wert von 1 bis 40 bedeuten.

5. Lithium-Ionen-Batterien gemäß Anspruch 1 bis 4, **dadurch gekennzeichnet, dass** der Elektrolyt ein oder mehrere Amine enthält ausgewählt aus der Gruppe umfassend Diethylentriamin, Triethylentetramin, Tetraethylenpentamin, Pentaethylenhexamin, Hexaethylenheptamin, Octylamin, Nonylamin, Decylamin, Undecylamin, Dodecylamin, Tributylamin, Triisooctylamin, Tridecylamin, Tetradecylamin, Pentadecylamin, Hexadecylamin, Heptadecylamin, Octadecylamin, 4-Hexylanilin, 4-Heptylanilin, 4-Octylanilin, 2,6-Diisopropylanilin, 4-Ethoxyanilin, N-Methylanilin, N-Ethyl-anilin, N-Propylanilin, N-Butylanilin, N-Pentylanilin, N-Hexylanilin, N-Octylanilin, N-Cyclohexylanilin, Dicyclohexylamin, p-Toluidin, Indolin, 2-Phenylethylamin, 1-Phenylethylamin, N-Methyldecylamin, Benzylamin, N,N-Dimethylbenzylamin, 1-Methylimidazol, 2-Ethylhexylamin, Dibutylamin, Dihexylamin, Di-(2-ethylhexylamin), 3,3'-Dimethyl-4,4'-diaminodicyclohexylmethan, 4,4'-Diaminodicyclohexylmethan, Ditridecylamin, Isophorondiamin, N,N,N',N'-Tetramethyl-1,6-hexandiamin, N,N-Dimethylcyclohexylamin, Octamethylendiamin, 2,6-Xylidin, 4,7,10-Trioxatridecan-1,13-diamin, 4,9-Dioxadodecan-1,12-diamin, Di-(2-methoxyethyl)amin, Bis(2-dimethylaminoethyl)ether, 2-(Diisopropylamino)ethylamin, Pentamethyldiethylentriamin, N-(3-Aminopropyl)imidazol, 1,2-Dimethylimidazol, 2,2'-Dimorpholinodiethylether, Dimethylaminoethoxyethanol, Bis(2-dimethylaminoethyl)ether, 1,8-Diazabicyclo-5,4,0-undecen-7, 3-(2-Aminoethylamino)propylamin, 3-(Cyclohexylamino)propylamin, Dipropylentriamin, N,N'-Bis(3-aminopropyl)-ethylendiamin, 1-(2-Hydroxyethyl)piperazin, 1-Vinylimidazol, 1-Hexylimidazol, 1-Octylimidazol und 1-(2-Ethylhexyl-)imidazol.

6. Lithium-Ionen-Batterien gemäß Anspruch 1 bis 5, **dadurch gekennzeichnet, dass** der Elektrolyt ein oder mehrere Nitrile enthält.

7. Lithium-Ionen-Batterien gemäß Anspruch 6, **dadurch gekennzeichnet, dass** ein oder mehrere Nitrile 2 bis 20 Kohlenstoffatome enthalten.

8. Lithium-Ionen-Batterien gemäß Anspruch 6 oder 7, **dadurch gekennzeichnet, dass** es sich bei einem oder mehreren Nitrilen um Nitrile der Essig-, Propion-, Butter-, Valerian- oder Capron-Säure oder der Fettsäuren mit bis zu 18 Kohlenstoffatomen oder um Dinitrile der Malon-, Bernstein-, Glutar-, Adipin-, Pimelin- oder Suberin-Säure handelt.

9. Lithium-Ionen-Batterien gemäß Anspruch 6 bis 8, **dadurch gekennzeichnet, dass** ein oder mehrere Nitrile silylierte Nitrile sind.

10. Lithium-Ionen-Batterien gemäß Anspruch 6 bis 9, **dadurch gekennzeichnet, dass** ein oder mehrere Nitrile ausgewählt werden aus der Gruppe umfassend 3-(Fluoro-dimethyl-silyl)-butan-nitril (FSN), 3-(Fluoro-dimethyl-silyl)-propan-nitril, 3-(Fluoro-dimethyl-silyl)-pentan-nitril, 3-(Fluoro-methyl-silyl)-butan-nitril und 3-(Di-Fluoro-methyl-silyl)-butan-nitril.

**11.** Lithium-Ionen-Batterien gemäß Anspruch 1 bis 10, **dadurch gekennzeichnet, dass** die Siliciumpartikel der Anode eine volumengewichtete Partikelgrößenverteilung mit Durchmesser-Perzentilen $d_{10} \geq 0{,}2$ $\mu$m und $d_{90} \leq 20{,}0$ $\mu$m haben.

**12.** Lithium-Ionen-Batterien gemäß Anspruch 1 bis 11, **dadurch gekennzeichnet, dass** die Siliciumpartikel der Anode eine volumengewichtete Partikelgrößenverteilung mit einer Breite $d_{90}$-$d_{10}$ von $\leq 15{,}0$ $\mu$m und $\geq 0{,}6$ $\mu$m haben.

**13.** Lithium-Ionen-Batterien gemäß Anspruch 1 bis 12, **dadurch gekennzeichnet, dass** die Siliciumpartikel der Anode eine volumengewichtete Partikelgrößenverteilung mit Durchmesser-Perzentilen $d_{50}$ von 0,5 bis 10,0 $\mu$m haben.

**14.** Lithium-Ionen-Batterien gemäß Anspruch 1 bis 13, **dadurch gekennzeichnet, dass** die Siliciumpartikel der Anode nicht aggregiert sind.

**Claims**

**1.** Lithium ion batteries comprising a cathode, an anode comprising silicon particles, a separator and an electrolyte, **characterized in that** the electrolyte comprises one or more amines and the anode material in the fully charged lithium ion battery is only partly lithiated,
with the proviso that the ratio of the lithium atoms to the silicon atoms in the partly lithiated anode material of the fully charged battery is $\leq 2.2$.

**2.** Lithium ion batteries according to Claim 1, **characterized in that** the ratio of the lithium atoms to the silicon atoms in the partly lithiated anode material of the fully charged battery is $\leq 1.98$ and $\geq 0.22$.

**3.** Lithium ion batteries according to Claim 1 or 2, **characterized in that** the capacity of the silicon of the anode material in the lithium ion battery is utilized to an extent of $\leq 50\%$, based on the maximum capacity of 4200 mAh per gram of silicon.

**4.** Lithium ion batteries according to Claim 1 to 3, **characterized in that** the electrolyte comprises one or more monoamines and/or one or more polyamines, where
monoamines satisfy the general formula (I)

$$NR^1R^2R^3 \qquad (I)$$

in which
$R^1$, $R^2$, $R^3$ are H or monovalent hydrocarbyl radicals which have 1 to 30 carbon atoms and may be substituted by substituents selected from F-, Cl- and $-OR^4$, and in which nonadjacent $-CH_2$-units may be replaced by units selected from $-C(=O)-$ and $-O-$, and $R^4$ is an alkyl radical having 1 to 10 carbon atoms; and
polyamines satisfy the general formula (II)

$R^5_2N$-$(CR^6_2)_a$-$(NR^7$-$(CR^6_2)_b)_c$-$NR^5_2$ (II) in which $R^5$, $R^6$, $R^7$ are H or hydrocarbyl radicals which have 1 to 18 carbon atoms and may be substituted by substituents selected from F-, Cl- and -OH, and in which nonadjacent $-CH_2-$ units may be replaced by units selected from $-C(=O)-$ and $-O-$,
a, b are integer values from 1 to 6 and c has the value of 0 or an integer value from 1 to 40.

**5.** Lithium ion batteries according to Claim 1 to 4, **characterized in that** the electrolyte comprises one or more amines selected from the group comprising diethylenetriamine, triethylenetetramine, tetraethylenepentamine, pentaethylenehexamine, hexaethyleneheptamine, octylamine, nonylamine, decylamine, undecylamine, dodecylamine, tributylamine, triisooctylamine, tridecylamine, tetradecylamine, pentadecylamine, hexadecylamine, heptadecylamine, octadecylamine, 4-hexylaniline, 4-heptylaniline, 4-octyl-aniline, 2,6-diisopropylaniline, 4-ethoxyaniline, N-methylaniline, N-ethylaniline, N-propylaniline, N-butylaniline, N-pentylaniline, N-hexylaniline, N-octylaniline, N-cyclohexylaniline, dicyclohexylamine, p-toluidine, indoline, 2-phenylethylamine, 1-phenylethylamine, N-methyldecylamine, benzylamine, N,N-dimethylbenzylamine, 1-methylimidazole, 2-ethylhexylamine, dibutylamine, dihexylamine, di(2-ethyl-hexylamine), 3,3'-dimethyl-4,4'-diaminodicyclohexylmethane, 4,4'-diaminodicyclohexylmethane, ditridecylamine, isophoronediamine, N,N,N',N'-tetramethyl-1,6-hexanediamine, N,N-dimethylcyclohexylamine, octamethylenediamine, 2,6-xylidine, 4,7,10-trioxatridecane-1,13-diamine, 4,9-dioxadodecane-1,12-diamine, di(2-methoxyethyl)amine, bis(2-dimethylaminoethyl) ether, 2-(diisopropylamino)ethylamine, pentamethyldiethylenetriamine, N-(3-aminopropyl)imidazole, 1,2-dimethylimidazole, 2,2'-dimorpholinodiethyl ether, dimethylaminoethoxyethanol, bis(2-dimethylaminoethyl) ether, 1,8-diazabicyclo[5.4.0]undec-7-ene, 3-(2-aminoethylamino)propylamine, 3-(cyclohexylamino)propylamine, dipropylenetriamine, N,N'-bis(3-aminopropyl)ethylene-diamine, 1-(2-hydroxyethyl)piperazine, 1-vinylimidazole, 1-hexylimidazole, 1-octylimidazole and 1-(2-ethylhexyl)-imidazole.

6. Lithium ion batteries according to Claim 1 to 5, **characterized in that** the electrolyte comprises one or more nitriles.

7. Lithium ion batteries according to Claim 6, **characterized in that** one or more nitriles contain 2 to 20 carbon atoms.

8. Lithium ion batteries according to Claim 6 or 7, **characterized in that** one or more nitriles are nitriles of acetic acid, propionic acid, butyric acid, valeric acid or caproic acid or of the fatty acids having up to 18 carbon atoms or are dinitriles of malonic acid, succinic acid, glutaric acid, adipic acid, pimelic acid or suberic acid.

9. Lithium ion batteries according to Claim 6 to 8, **characterized in that** one or more nitriles are silylated nitriles.

10. Lithium ion batteries according to Claim 6 to 9, **characterized in that** one or more nitriles are selected from the group comprising 3-(fluorodimethylsilyl)butanenitrile (FSN), 3-(fluorodimethylsilyl)propanenitrile, 3-(fluorodimethyl-silyl)pentanenitrile, 3-(fluoromethylsilyl)butanenitrile and 3-(difluoromethylsilyl)butanenitrile.

11. Lithium ion batteries according to Claim 1 to 10, **characterized in that** the silicon particles of the anode have a volume-weighted particle size distribution with diameter percentiles $d_{10} \geq 0.2 \ \mu m$ and $d_{90} \leq 20.0 \ \mu m$.

12. Lithium ion batteries according to Claim 1 to 11, **characterized in that** the silicon particles of the anode have a volume-weighted particle size distribution having a breadth $d_{90}$-$d_{10}$ of $\leq 15.0 \ \mu m$ and $\geq 0.6 \ \mu m$.

13. Lithium ion batteries according to Claim 1 to 12, **characterized in that** the silicon particles of the anode have a volume-weighted particle size distribution having diameter percentiles dso of 0.5 to 10.0 $\mu m$.

14. Lithium ion batteries according to Claim 1 to 13, **characterized in that** the silicon particles of the anode are not aggregated.

## Revendications

1. Batteries lithium-ion comprenant une cathode, une anode contenant des particules de silicium, un séparateur et un électrolyte, **caractérisées en ce que** l'électrolyte contient une ou plusieurs amines et le matériau de l'anode n'est que partiellement lithié dans la batterie lithium-ion entièrement chargée, à condition que, dans le matériau d'anode partiellement lithié de la batterie entièrement chargée, le rapport entre les atomes de lithium et les atomes de silicium soit $\leq 2,2$.

2. Batteries lithium-ion selon la revendication 1, **caractérisées en ce que**, dans le matériau d'anode partiellement lithié de la batterie entièrement chargée, le rapport entre les atomes de lithium et les atomes de silicium est $\leq 1,98$ et $\geq 0,22$.

3. Batteries lithium-ion selon la revendication 1 ou 2, **caractérisées en ce que** la capacité du silicium du matériau d'anode de la batterie lithium-ion est utilisé à hauteur de $\leq 50$ %, par rapport à la capacité maximale de 4 200 mAh par gramme de silicium.

4. Batteries lithium-ion selon les revendications 1 à 3, **caractérisées en ce que** l'électrolyte contient une ou plusieurs monoamines et/ou une ou plusieurs polyamines, les monoamines satisfaisant la formule générale (I) :

$$NR^1R^2R^3 \qquad (I),$$

dans laquelle

$R^1$, $R^2$, $R^3$ signifient H ou des radicaux hydrocarbonés monovalents de 1 à 30 atomes de carbone, qui peuvent être substitués avec des substituants qui sont choisis parmi F-, Cl- et -OR$^4$, et dans lesquels des unités -CH$_2$- non voisines peuvent être remplacées par des unités qui sont choisies parmi -C(=O)- et -O-, et

R$^4$ signifie un radical alkyle de 1 à 10 atomes de carbone ; et
les polyamines satisfaisant la formule générale (II)

$$R^5{}_2N\text{-}(CR^6{}_2)_a\text{-}(NR^7\text{-}(CR^6{}_2)_b)_c\text{-}NR^5{}_2 \qquad (II),$$

dans laquelle

R$^5$, R$^6$, R$^7$ signifient H ou des radicaux hydrocarbonés de 1 à 18 atomes de carbone, qui peuvent être substitués avec des substituants qui sont choisis parmi F-, Cl- et -OH, et dans lesquels des unités -CH$_2$- non voisines peuvent être remplacées par des unités qui sont choisies parmi -C(=O)- et -O-,
a, b signifient des valeurs de nombre entier de 1 à 6, et
c signifie la valeur 0 ou une valeur de nombre entier de 1 à 40.

5. Batteries lithium-ion selon les revendications 1 à 4, **caractérisées en ce que** l'électrolyte contient une ou plusieurs amines choisies dans le groupe comprenant la diéthylène-triamine, la triéthylène-tétramine, la tétraéthylène-pentamine, la pentaéthylène-hexamine, l'hexaéthylène-heptamine, l'octylamine, la nonylamine, la décylamine, l'undécylamine, la dodécylamine, la tributylamine, la triisooctylamine, la tridécylamine, la tétradécylamine, la pentadécylamine, l'hexadécylamine, l'heptadécylamine, l'octadécylamine, la 4-hexylaniline, la 4-heptylaniline, la 4-octylaniline, la 2,6-diisopropylaniline, la 4-éthoxyaniline, la N-méthylaniline, la N-éthylaniline, la N-propylaniline, la N-butylaniline, la N-pentylaniline, la N-hexylaniline, la N-octylaniline, la N-cyclohexylaniline, la dicyclohexylaniline, la p-toluidine, l'indoline, la 2-phényléthylamine, la 1-phényléthylamine, la N-méthyldécylamine, la benzylamine, la N,N-diméthylbenzylamine, le 1-méthylimidazole, la 2-éthylhexylamine, la dibutylamine, la dihexylamine, la di-(2-éthylhexylamine), le 3,3'-diméthyl-4,4'-diaminodicyclohexylméthane, le 4,4'-diamino-dicyclohexylméthane, la ditridécylamine, l'isophoronediamine, la N,N,N',N'-tétraméthyl-1,6-hexane-diamine, la N,N-diméthyl-cyclohexylamine, l'octaméthylène-diamine, la 2,6-xylidine, la 4,7,10-trioxatridécane-1,13-diamine, la 4,9-dioxadodécane-1,12-diamine, la di-(2-méthoxyéthyl)amine, l'éther bis(2-diméthylaminoéthylique), la 2-(diisopropylamino)éthylamine, la pentaméthyldiéthylène-triamine, le N-(3-aminopropyl)imidazole, le 1,2-diméthylimidazole, l'éther 2,2'-dimorpholinodiéthylique, le diméthylaminoéthoxyéthanol, l'éther bis(2-diméthylaminoéthylique), le 1,8-diazabicyclo-5,4,0-undécène-7, la 3-(2-aminoéthylamino)propylamine, la 3-(cyclohexylamino)propylamine, la dipropylène-triamine, la N,N'-bis(3-aminopropyl)-éthylène-diamine, la 1-(2-hydroxyéthyl)pipérazine, le 1-vinylimidazole, le 1-hexylimidazole, le 1-octylimidazole et le 1-(2-éthylhexyl)imidazole.

6. Batteries lithium-ion selon les revendications 1 à 5, **caractérisées en ce que** l'électrolyte contient un ou plusieurs nitriles.

7. Batteries lithium-ion selon la revendication 6, **caractérisées en ce qu'**un ou plusieurs nitriles contiennent 2 à 20 atomes de carbone.

8. Batteries lithium-ion selon la revendication 6 ou 7, **caractérisées en ce qu'**un ou plusieurs nitriles consistent en des nitriles de l'acide acétique, propionique, butyrique, valérique ou caproïque ou d'acides gras contenant jusqu'à 18 atomes de carbone, ou en des dinitriles de l'acide malonique, succinique, glutarique, adipique, pimélique ou subérique.

9. Batteries lithium-ion selon les revendications 6 à 8, **caractérisées en ce qu'**un ou plusieurs nitriles sont des nitriles silylés.

10. Batteries lithium-ion selon les revendications 6 à 9, **caractérisées en ce qu'**un ou plusieurs nitriles sont choisis dans le groupe comprenant le 3-(fluoro-diméthyl-silyl)-butane-nitrile (FSN), le 3-(fluoro-diméthyl-silyl)-propane-nitrile, le 3-(fluoro-diméthyl-silyl)-pentane-nitrile, le 3-(fluoro-méthyl-silyl)-butane-nitrile et le 3-(difluoro-méthyl-silyl)-butane-nitrile.

11. Batteries lithium-ion selon les revendications 1 à 10, **caractérisées en ce que** les particules de silicium de l'anode présentent une distribution des tailles de particules pondérée en volume ayant des centiles de diamètre $d_{10} \geq 0,2$ $\mu$m et $d_{90} \leq 20,0$ $\mu$m.

12. Batteries lithium-ion selon les revendications 1 à 11, **caractérisées en ce que** les particules de silicium de l'anode présentent une distribution des tailles de particules pondérée en volume ayant une largeur $d_{90}$-$d_{10} \leq 15,0$ $\mu$m et $\geq$ 0,6 $\mu$m.

**13.** Batteries lithium-ion selon les revendications 1 à 12, **caractérisées en ce que** les particules de silicium de l'anode présentent une distribution des tailles de particules pondérée en volume ayant des centiles de diamètre $d_{50}$ de 0,5 à 10,0 $\mu$m.

**14.** Batteries lithium-ion selon les revendications 1 à 13, **caractérisées en ce que** les particules de silicium de l'anode ne sont pas agrégées.

Fig. 1:

Fig. 2:

Fig. 3:

Fig. 4:

Fig. 5:

Fig. 6:

Fig. 7:

Fig. 8:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7476469 B
- DE 69027143
- US 8551661 B
- EP 1313158 A2
- US 2011045357 A1
- WO 2014202529 A

- EP 1730800 A
- US 2003235762 A
- US 2009305129 A
- US 20050214646 A
- JP 4911835 B

**In der Beschreibung aufgeführte Nicht-Patentliteratur**

- **GU-YEON KIM ; J.R. DAHN.** *Journal of The Electrochemical Society,* 2015, vol. 162 (3), A437-A447

- **M. GAUTHIER.** *Journal of Power Sources,* 2014, vol. 256, 32-36